# DEMANDE DE BREVET EUROPEEN

(11) **EP 4 717 576 A1**
(43) Date de publication de la demande: **01.04.2026**
(21) Numéro de dépôt: 25204424.3
(22) Date de dépôt: 24.09.2025
(51) Int. Cl.: B62K 5/027, B62K 5/10, B62K 7/04, B62K 25/04

(54) **VÉHICULE TRICYCLE COMPRENANT UN SYSTÈME DE FREIN DE STATIONNEMENT AUTOMATIQUE**

(30) Priorité: 26.09.2024 FR 2410317
(71) Demandeur: Ligier Group, 03200 Abrest (FR)
(72) Inventeur: Haudecoeur, Lois, 03200 ABREST (FR); Dechelle, Fabien, 03200 ABREST (FR); Pereira, Nicolas, 03200 ABREST (FR); Yassine, Bilal, 03200 ABREST (FR); Sokhna, Mariama, 03200 ABREST (FR)
(74) Mandataire: Gevers & Orès

(57) **Abrégé**

- Véhicule tricycle comprenant un système de frein de stationnement automatique.
- Le véhicule (1) tricycle comporte un châssis (2) comprenant un cadre avant (3) configuré pour l'installation d'un conducteur dudit véhicule (1) tricycle sur une selle (41), et un cadre arrière (5), ledit cadre avant (3) étant articulé en rotation autour d'un axe d'articulation (23) par rapport au cadre arrière (5) de manière à permettre un basculement du cadre avant (3) par rapport au cadre arrière (5) en direction de la chaussée de part et d'autre d'une position verticale, le véhicule (1) tricycle étant particulier en ce qu'il comprend un système de frein de stationnement (8) configuré pour alternativement bloquer ou débloquer ledit basculement du cadre avant (3) de façon automatique lorsque respectivement au moins une condition de blocage ou au moins une condition de déblocage est satisfaite. Ainsi, l'ergonomie du véhicule (1) tricycle peut être améliorée, sans qu'aucune action particulière ne soit requise de la part du conducteur. Cela permet notamment d'obtenir un gain de temps et de confort pour le conducteur.

## Description

### Domaine technique

La présente invention concerne un véhicule tricycle, notamment un véhicule tricycle motorisé, comprenant un système de frein de stationnement automatique. Plus particulièrement, le frein de stationnement automatique est destiné à un véhicule tricycle comportant un dispositif pendulaire.

### Etat de la technique

Dans le domaine des cycles, il est déjà connu des cycles à deux roues du type dit « scooter » qui sont appréciés pour le confort de conduite qu'il procure en raison du positionnement du conducteur. Cela étant, quand il s'agit de transporter de lourdes charges, ceux-ci peuvent s'avérer inadaptés, notamment par manque de stabilité, que cela soit en course ou à l'arrêt.

Pour améliorer la stabilité d'un cycle, il est connu d'avoir recours à un cycle à trois roues, ou tricycle. Cependant, ceux-ci posent des problèmes de maniabilité, notamment de rayons de braquage.

Des tricycles munis d'une paire de roues à l'avant ont été proposés et sont désormais couramment utilisés grâce à leur bonne maniabilité. Leur stabilité est néanmoins inférieure à celle d'un tricycle classique (avec deux roues à l'arrière). On connaît également par le document FR 3020335 un tricycle classique dont le châssis est réalisé en plusieurs parties articulées entre elles de manière à permettre un basculement latéral d'une partie avant par rapport à une partie arrière pour améliorer la maniabilité du tricycle.

Toutefois, un tel tricycle n'est pas complètement satisfaisant du point de vue ergonomique. Par exemple, lorsque le conducteur s'arrête et quitte le tricycle, il peut être nécessaire de bloquer au moins ledit basculement pour stabiliser et sécuriser ledit tricycle. En particulier, dans le cadre de certaines applications comme un tricycle de livraison, le conducteur doit réaliser beaucoup d'arrêts et donc bloquer le basculement très régulièrement. De plus, le conducteur peut omettre d'activer le blocage du basculement, ce qui peut causer des problèmes de stabilité et de sécurité. Les tricycles connus peuvent donc présenter une gêne pour l'efficacité et le confort du conducteur, au moins en ce qui concerne le blocage du basculement d'une partie du châssis.

Il existe donc un besoin de trouver une solution permettent d'améliorer l'ergonomie d'un tel tricycle.

### Exposé de l'invention

La présente invention a pour objet de remédier aux inconvénients précités. Elle concerne un véhicule tricycle comportant un châssis réalisé en au moins deux parties pouvant pivoter l'une par rapport à l'autre, ledit châssis comprenant un cadre avant muni d'une roue avant et configuré pour l'installation d'un conducteur dudit véhicule tricycle sur une selle, et un cadre arrière muni de deux roues arrière, ledit cadre avant étant articulé en rotation autour d'un axe d'articulation par rapport au cadre arrière de manière à permettre un basculement du cadre avant par rapport au cadre arrière en direction de la chaussée de part et d'autre d'une position verticale.

Selon l'invention, le véhicule tricycle comprend un système de frein de stationnement et un système de gestion, ledit système de frein de stationnement étant configuré pour être commandé par le système de gestion de manière à alternativement bloquer ledit basculement du cadre avant de façon automatique lorsqu'au moins une condition de blocage est satisfaite ou débloquer ledit basculement du cadre avant lorsqu'au moins une condition de déblocage est satisfaite.

Ainsi, grâce à la présente invention, on est en mesure d'assister le conducteur en améliorant simplement et de façon automatique l'ergonomie du véhicule tricycle. Aucune action n'est requise de la part du conducteur pour bloquer le basculement et obtenir une bonne stabilité du véhicule tricycle dans les conditions considérées. En conséquence, lorsque les conditions sont réunies, le conducteur n'a plus à se soucier de gérer la stabilité du véhicule tricycle au stationnement ce qui représente un gain de temps et de confort pour le conducteur.

Avantageusement, le véhicule tricycle comporte un dispositif pendulaire comprenant un palier lié au cadre avant et un arbre lié au cadre arrière, ledit palier étant articulé en rotation autour dudit arbre, l'axe longitudinal dudit arbre correspondant à l'axe d'articulation permettant le basculement du cadre avant, le système de frein de stationnement étant configuré pour alternativement bloquer en rotation le palier de manière à bloquer le basculement du cadre avant ou débloquer en rotation le palier de manière à débloquer le basculement du cadre avant.

Dans un mode de réalisation particulier, le système de frein de stationnement comprend au moins un étrier de frein muni au moins d'une paire de mâchoires, ledit étrier de frein étant fixé sur le cadre arrière, le dispositif pendulaire comprenant en outre un disque lié de façon solidaire au palier, le disque s'étendant angulairement et perpendiculairement autour du palier, ledit étrier de frein étant configuré pour alternativement rapprocher les mâchoires du disque pour que lesdites mâchoires viennent en contact avec ledit disque de manière à bloquer le palier en rotation ou écarter les mâchoires du disque pour que lesdites mâchoires libèrent ledit disque de manière à débloquer la rotation du palier.

De façon avantageuse, le système de frein de stationnement comprend au moins un premier maître-cylindre et un actionneur, le système de gestion étant configuré pour commander l'actionneur de sorte que ledit actionneur commande le premier maître-cylindre, ledit premier maître-cylindre étant configuré pour alternativement rapprocher ou écarter les mâchoires de l'étrier de frein lorsqu'il est commandé par l'actionneur.

De préférence, l'actionneur permettant de commander le premier maître-cylindre correspond à un actionneur linéaire.

Dans un autre mode de réalisation particulier, le système de frein de stationnement comprend au moins un actionneur de frein électrique, le système de gestion étant configuré pour commander l'actionneur de frein électrique, l'actionneur de frein électrique étant configuré pour alternativement rapprocher ou écarter les mâchoires de l'étrier de frein lorsqu'il est commandé par le système de gestion.

Dans un mode de réalisation particulier, le système de frein de stationnement comprend un second maître-cylindre configuré pour pouvoir être actionné manuellement de façon à alternativement bloquer ou débloquer le basculement du cadre avant.

Dans un mode de réalisation particulier, le système de frein de stationnement est configuré pour alternativement bloquer ou débloquer simultanément le basculement du cadre avant et un déplacement avant et/ou arrière du véhicule tricycle.

Ainsi, en une seule action (automatique ou manuelle) on est en mesure d'améliorer davantage encore l'ergonomie du véhicule tricycle. En effet, le blocage ou déblocage du basculement du cadre avant et le blocage ou déblocage du déplacement du véhicule tricycle étant réalisés automatiquement en même temps, le conducteur bénéficie d'un meilleur gain de temps et de confort.

Dans un mode de réalisation particulier, la selle du cadre avant comporte un détecteur de présence ou d'absence du conducteur sur ladite selle, le système de frein de stationnement étant configuré pour être commandé par le système de gestion pour mettre en œuvre ledit blocage automatique lorsque les conditions de blocage suivantes sont satisfaites :
- le véhicule tricycle présente une vitesse inférieure ou égale à une vitesse prédéterminée ; et
- une absence du conducteur sur la selle du cadre avant est détectée par ledit détecteur.

Ainsi, le conducteur peut quitter le véhicule tricycle à l'arrêt sans avoir à se soucier d'activer le frein de stationnement.

Dans un mode de réalisation particulier, le véhicule tricycle comporte une serrure d'allumage configurée pour recevoir une clé de contact et un sélecteur de mode de conduite du véhicule tricycle, la selle du cadre avant comportant en outre un détecteur de présence ou d'absence du conducteur sur ladite selle, le système de frein de stationnement étant configuré pour être commandé par le système de gestion pour mettre en œuvre ledit déblocage automatique lorsque les conditions de déblocage suivantes sont satisfaites :
- la clé de contact se trouve dans une position de conduite dans la serrure d'allumage ;
- la sélecteur de mode de conduite se trouve dans une position de marche avant ou une position de marche arrière ; et
- une présence du conducteur sur la selle du cadre avant est détectée par ledit détecteur.

### Brève description des figures

Les figures annexées feront bien comprendre comment l'invention peut être réalisée. Sur ces figures, des références identiques désignent des éléments semblables.
La [Fig.1] est une vue latérale d'un véhicule tricycle comprenant un dispositif pendulaire et un système de frein de stationnement selon un mode de réalisation particulier.
La [Fig.2] est une vue détaillée, en perspective, d'un mode de réalisation particulier d'un système de frein de stationnement permettant un blocage et un déblocage d'un dispositif pendulaire.
La [Fig.3] est une vue détaillée, en perspective, d'un dispositif pendulaire selon un mode de réalisation particulier.
La [Fig.4] est une vue schématique d'un autre mode de réalisation particulier d'un système de frein de stationnement permettant un blocage et un déblocage d'un dispositif pendulaire.
La [Fig.5] est une vue de deux véhicule tricycle selon un mode de réalisation particulier illustrant un basculement d'un cadre avant par rapport à un cadre arrière vers la droite et vers la gauche.

### Description détaillée

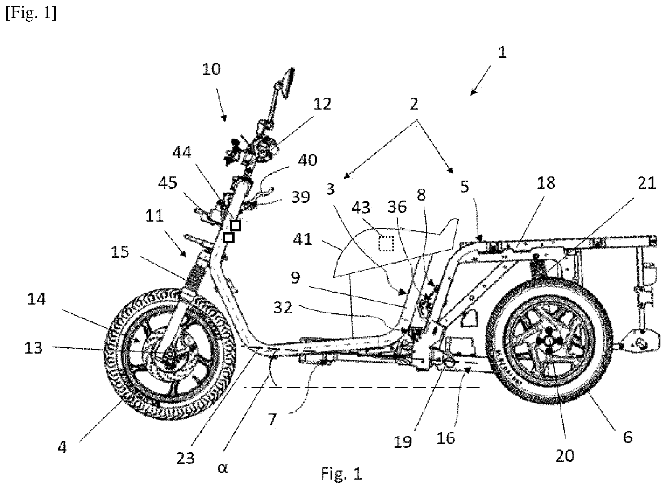

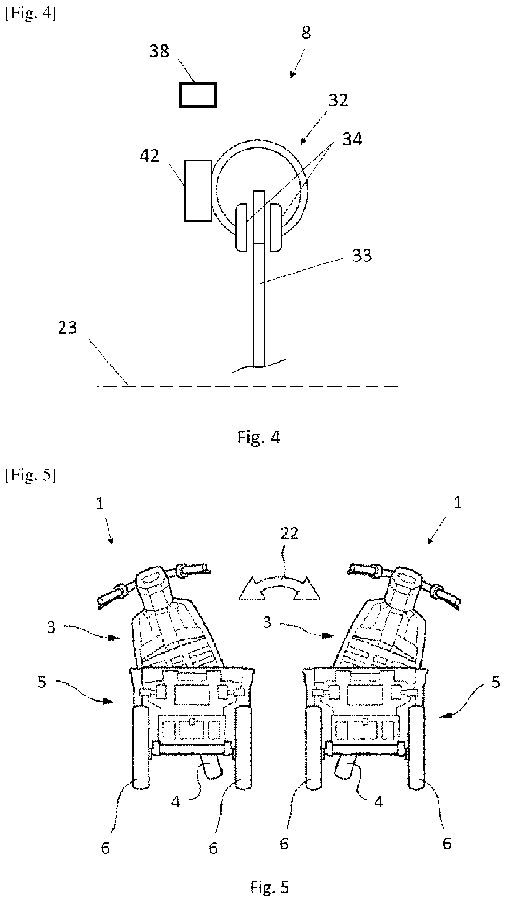

Le véhicule 1 tricycle (ci-après noté véhicule 1) permettant d'illustrer la présente invention est représenté de la [Fig.1] à la [Fig.4] dans des modes de réalisation particuliers. Comme illustré sur la [Fig.1], le véhicule 1 comporte un châssis 2 réalisé en deux parties articulées entre elles. Le châssis 2 comprend un cadre avant 3 muni d'une roue avant 4 et un cadre arrière 5 muni de deux roues arrière 6.

Le véhicule 1 comporte un dispositif pendulaire 7 permettant de réaliser l'articulation entre le cadre avant 3 et le cadre arrière 5, comme expliqué en détail ci-après. De plus, le véhicule 1 est particulier en ce qu'il comporte également un système de frein de stationnement 8 (aussi appelé système de frein de parking) permettant d'alternativement bloquer ou débloquer automatiquement au moins le dispositif pendulaire 7 comme précisé ci-après.

Le cadre avant 3 est destiné à l'installation d'un conducteur (non représenté) du véhicule 1. Dans le mode de réalisation de la [Fig.1], le cadre avant 3 comprend une armature 9 sur laquelle sont rapportés une selle 41 et un équipage avant 10.

De façon usuelle, l'équipage avant 10 comprend une fourche directionnelle 11, un guidon 12 et la roue avant 4. La fourche directionnelle 11 est articulée en rotation sur le cadre avant 3 pour permettre d'orienter la roue avant 4 sur la gauche ou sur la droite. Le guidon 12 est relié à la fourche directionnelle 11 pour permettre son orientation par le conducteur. La roue avant 4 est libre en rotation par rapport à un axe 13 lié à la fourche directionnelle 11. Ladite roue avant 4 est munie d'un système de freinage 14, par exemple un frein à disque, actionnable depuis le guidon 12. Ledit équipage avant 10 comprend en outre un système de suspension 15 permettant d'amortir la transmission au guidon 12 et à l'armature 9 des chocs encaissés par la roue avant 4. Il s'agit, par exemple, d'un système de suspension de type à vérin pneumatique et/ou à ressort.

Par ailleurs, le cadre avant 3 peut comprendre différentes pièces d'habillage (non représentées) fixées à l'armature 9 et permettant de dissimuler certaines parties du cadre avant 3 telle qu'une partie de la fourche directionnelle 11.

De préférence, l'armature 9 présente une configuration permettant au véhicule d'offrir un aspect de scooter, c'est-à-dire permettant au conducteur de reposer ses pieds dans un espace libre situé à l'avant de son buste plutôt que sur des pédales situées de part et d'autre du cadre avant 3.

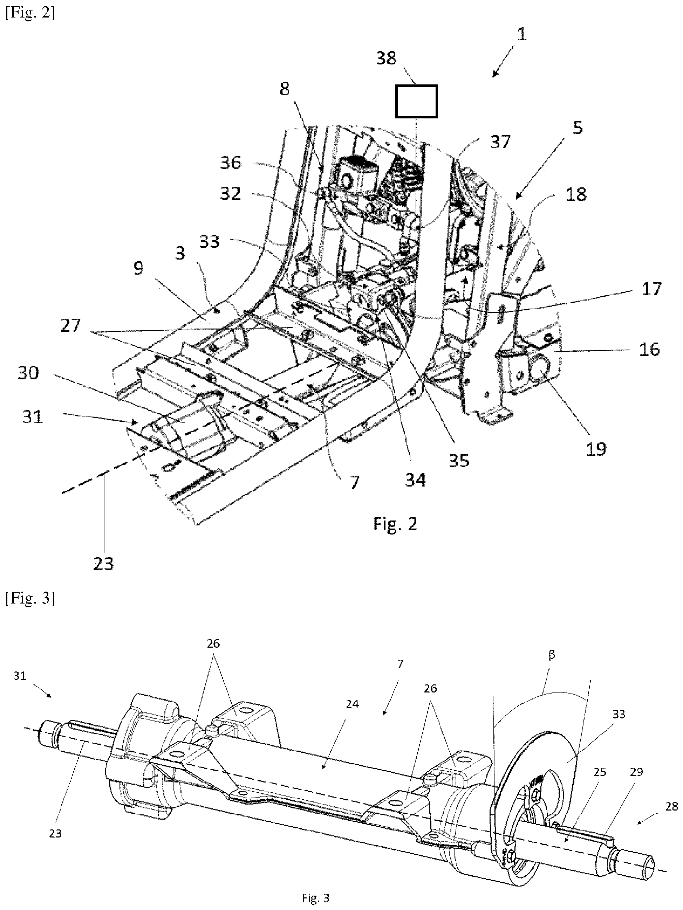

Dans le mode de réalisation de la [Fig.1], le cadre arrière 5 comprend un bras oscillant 16 configuré pour recevoir un groupe moto propulseur 17 (visible sur la [Fig.2]). Ce groupe moto propulseur 17 est configuré pour entraîner les roues arrière 6. De préférence, le groupe moto propulseur est de type électrique. Dans ce cas, le véhicule 1 comprend une batterie permettant d'alimenter le groupe moto propulseur 17 et portée par l'armature de support 18 du cadre arrière 5. Il peut s'agir, par exemple, d'une batterie de type LiFePO4.

En outre, le bras oscillant 16 est, de préférence, agencée au niveau d'une partie basse du cadre arrière 5 ce qui permet de conférer un centre de gravité particulièrement bas au véhicule 1.

De plus, le cadre arrière 5 peut comprendre une armature de support 18 liée par une articulation 19 au bras oscillant 16. De préférence, l'articulation 19 est agencée entre le groupe moto propulseur 17, en particulier un essieu 20 des roues arrière 6, et le dispositif pendulaire 7. L'armature de support 18 est notamment montée de manière à être suspendue par rapport au bras oscillant 16, ce qui permet d'amortir la transmission des chocs.

L'armature de support 18 peut comprendre une plateforme (non représentée) configurée pour recevoir une charge telle qu'un coffre ou un coffret de rangement. À titre d'exemple non limitatif, il peut s'agir d'un coffre destiné à contenir du courrier. Cette plateforme peut, par exemple, être agencée au droit du groupe moto propulseur 17, au-dessus d'un passage de roue des roues arrière 6.

Comme représenté sur la [Fig.1], la cadre arrière 5 est équipé d'un système de suspension 21 lié à chaque roue arrière 6. Il s'agit, par exemple d'un système de suspension de type à vérin pneumatique et/ou à ressort. Le système de suspension 21 est lié d'une part à l'armature de support 18 et d'autre part au bras oscillant 16, notamment au voisinage d'un axe d'entraînement des roues arrière 6.

Par ailleurs, comme illustré sur la [Fig.5], le cadre avant 3 est articulé par rapport au cadre arrière 5 de manière à permettre un basculement du cadre avant 3 par rapport audit cadre arrière 5 en direction de la chaussée de part et d'autre d'une position verticale, selon la flèche 22. Autrement dit, le cadre avant 3 peut basculer autour d'un axe d'articulation 23 (visible sur la [Fig.1] et la [Fig.2]) situé dans un plan contenant la verticale et passant par un point milieu des roues arrière 6. Encore autrement dit, alors que le cadre arrière 5 reste horizontal, c'est-à-dire que les deux roues arrière 6 restent en contact avec la chaussée, le cadre avant 3 peut basculer, sous l'effet d'une impulsion donnée par le conducteur, vers la droite ou vers la gauche. Un tel pivotement donne une bonne maniabilité au véhicule 1, en particulier en permettant au conducteur de virer sans avoir à tourner le guidon 12 ou en le tournant peu.

Comme représenté sur la [Fig.5], on voit sur la gauche un basculement vers la gauche du cadre avant 3 permettant de virer vers la gauche et sur la droite un basculement vers la droite permettant de virer vers la droite. Bien qu'étant en présence d'un tricycle, le conducteur peut de la sorte retrouver des sensations de conduite d'un deux roues. Ledit angle de basculement est limité, par exemple, à 30°.

Dans un mode de réalisation préféré représenté sur la [Fig.1], le véhicule 1 est configuré pour que l'axe d'articulation 23 soit incliné d'un angle α strictement positif par rapport à la chaussée. L'axe d'articulation 23 n'est donc pas horizontal et s'élève de l'arrière vers l'avant du véhicule 1.

De préférence, l'angle α est inférieur à 14°. De manière privilégiée, l'angle α est compris entre 5° et 10°. L'angle α pourra notamment être égal à 7°. De telles caractéristiques renforcent la bonne tenue du véhicule 1, à la fois en termes de stabilité et de maniabilité.

Dans le mode de réalisation de la [Fig.1] et de la [Fig.2], l'articulation entre le cadre avant 3 et le cadre arrière 5 est réalisée par le dispositif pendulaire 7. Comme représenté plus en détail sur la [Fig.2] et la [Fig.3], le dispositif pendulaire 7 comprend un palier 24 articulé en rotation autour d'un arbre 25. Le palier 24 est lié au cadre avant 3 tandis que l'arbre 25 est lié au cadre arrière 5. L'axe longitudinal de l'arbre 25 correspond à l'axe d'articulation 23 du dispositif pendulaire 7 permettant le basculement du cadre avant 3.

Plus précisément, le palier 24 est fixé sur l'armature 9 du cadre avant 3. Cette fixation peut être réalisée par l'intermédiaire de brides 26 configurée pour être fixée à un support 27 prévu à cet effet sur l'armature 9 à l'aide d'éléments de fixation usuels tels que des vis ou des boulons. De plus, l'arbre 25 est lié à l'une de ses extrémités, dite extrémité arrière 28, à l'armature de support 18 du cadre arrière 5. Cette liaison peut être réalisée par l'intermédiaire d'une ou plusieurs clavettes 29.

En outre, le véhicule 1 peut comprendre un amortisseur de couple 30 agencé entre le palier 24 et l'arbre 25. Dans le mode de réalisation des [Fig.1], [Fig.2] et [Fig.3], l'amortisseur de couple 30 est agencé à une extrémité, dite extrémité avant 31, du dispositif pendulaire 7, opposée à l'extrémité arrière 28 de l'arbre 25. Dans ce mode de réalisation, l'amortisseur de couple 30 correspond à un amortisseur usuel comprenant un boitier pourvu d'un logement dans lequel des éléments de type ressorts comprimables et précontraints sont agencés. Ledit logement est prévu pour recevoir une extrémité de l'arbre 25 configurée pour interagir avec les éléments ressorts de l'amortisseur de couple 30 de manière à amortir les mouvements entre le palier 24 et l'arbre 25.

De préférence, l'axe de l'articulation 19 entre le bras oscillant 16 et l'armature de support 18 est sensiblement orthogonal à l'axe d'articulation 23 du dispositif pendulaire 7. De plus, l'axe de l'articulation 19 est agencé au niveau de l'extrémité arrière 28 de l'arbre 25 de sorte que ledit axe de l'articulation 19 passe par l'axe d'articulation 23 permettant le basculement du cadre avant 3.

En outre, le cadre arrière 5 peut comprendre un système de freinage usuel des roues arrière 6, notamment un système de freinage à disque.

Par ailleurs, comme représenté sur les [Fig.1] et [Fig.2], le véhicule 1 comprend le système de frein de stationnement 8 configuré pour bloquer ou débloquer le basculement du cadre avant 3 par rapport au cadre arrière 5. Plus particulièrement, le blocage est réalisé de façon automatique lorsque certaines conditions, dites conditions de blocage, sont satisfaites. De façon analogue, le déblocage est réalisé de façon automatique lorsque certaines conditions, dites conditions de déblocage, sont satisfaites.

Dans le mode de réalisation des [Fig.1], [Fig.2], [Fig.3] et [Fig.4], le système de frein de stationnement 8 est configuré pour bloquer ou débloquer le palier 24 en rotation de manière à bloquer le basculement du cadre avant 3. Pour ce faire, comme représenté sur la [Fig.2], le système de frein de stationnement 8 peut comprendre un étrier de frein 32 configuré pour bloquer ou débloquer un disque 33 du palier 24. L'étrier de frein 32 comporte des mâchoires 34 munies de plaquettes de frein 35. L'étrier de frein 32 est fixé sur le cadre arrière 5 de sorte que les mâchoires 34 soient agencées de part et d'autre du disque 33.

Pour réaliser le blocage, les mâchoires 34 sont configurées pour pouvoir être rapprochées du disque 33 de manière à presser les plaquettes de frein 35 contre ce dernier. Le frottement des plaquettes de frein 35 sur le disque 3 permet de bloquer en rotation le disque 33 et donc le palier 24 aussi. Le blocage du palier 24 en rotation a pour effet de bloquer également le basculement du cadre avant 3 par rapport au cadre arrière 5.

Pour réaliser le déblocage, les mâchoires 34 sont configurées pour pouvoir être écartées du disque 33 de manière à libérer ce dernier. Les plaquettes de frein 35 n'étant plus en contact avec le disque 33, cela permet de débloquer en rotation le disque 33 et donc le palier 24 aussi. Le déblocage du palier 24 en rotation a pour effet de débloquer également le basculement du cadre avant 3 par rapport au cadre arrière 5.

Dans le mode de réalisation particulier des [Fig.2] et [Fig.3], le disque 33 s'étend angulairement par rapport à l'axe d'articulation 23, autour du palier 24. Le disque 33 peut correspondre à une pièce rapportée fixée sur le palier 24 par l'intermédiaire d'éléments de fixations usuels tels que des vis ou des boulons. En outre, le disque 33 peut présenter la forme d'un disque complet ou d'une portion de disque. De préférence, comme représenté sur la [Fig.3], le disque 33 correspond à une portion de disque s'étendant sur un angle β inférieur ou égal à 180°.

En outre, dans un mode de réalisation particulier représenté sur la [Fig.2], le système de frein de stationnement 8 peut comporter un premier maître-cylindre 36 et un actionneur 37. Ils sont tous les deux fixés sur le cadre arrière 5. L'actionneur 37 est configuré pour pouvoir commander le maître-cylindre 36 de façon à bloquer ou débloquer le basculement du cadre avant 3. En effet, le maître-cylindre 36 est configuré pour pouvoir rapprocher ou écarter les mâchoires 34 de l'étrier de frein 32. Ainsi, selon la commande fournie par l'actionneur 37, le maître-cylindre 36 presse les mâchoires 34 contre le disque 33 ou relâche lesdites mâchoire 34 de manière à respectivement bloquer ou débloquer le disque 33 en rotation.

De préférence, l'actionneur 37 est de nature électrique. Plus particulièrement, l'actionneur 37 correspond de préférence à un actionneur linéaire. Le maître-cylindre 36, quant à lui, correspond de préférence à un organe hydraulique.

En outre, comme représenté schématiquement sur la [Fig.2], le véhicule 1 comporte un système de gestion 38 électronique permettant d'activer le système de frein de stationnement 8. Plus particulièrement, dans le mode de réalisation particulier ci-dessus, le système de gestion 38 est configuré pour activer l'actionneur 37. Pour ce faire, le système de gestion 38 peut comprendre une ou plusieurs unités de calculs usuels.

Dans un autre mode de réalisation particulier représenté schématiquement sur la [Fig.4], en variante du mode de réalisation précédent, le système de frein de stationnement 8 comprend un actionneur de frein électrique 42 configuré pour pouvoir être commandé par le système de gestion 38. Selon la commande du système de gestion 38, l'actionneur de frein électrique 42 rapproche ou écarte les mâchoires 34 du disque 33 afin de respectivement bloquer ou débloquer le basculement du cadre avant 3. Pour ce faire, l'actionneur de frein électrique 42 peut comprendre une unité de type motoréducteur électrique usuelle.

Dans un mode de réalisation particulier non limitatif, le système de frein de stationnement 8 est configuré pour mettre en œuvre le blocage automatique du basculement du cadre avant 3 lorsque les conditions de blocage suivantes sont satisfaites :
- le véhicule 1 présente une vitesse inférieure ou égale à une vitesse prédéterminée ; et
- une absence du conducteur sur la selle 41 du cadre avant 3 est détectée.

De préférence, la vitesse prédéterminée correspond à une vitesse réduite proche de l'allure du pas, à savoir une vitesse proche de 4 km/h. Par exemple, la vitesse prédéterminée peut être égale à 5km/h.

En outre, pour détecter la présence ou l'absence de conducteur sur la selle 41 du cadre avant 3, le véhicule 1 peut, par exemple, comporter un détecteur 43 de présence ou d'absence du conducteur sur ladite selle 41. Ce détecteur 43 peut être intégré dans la selle 41, comme représenté schématiquement sur la [Fig.1].

Dans ce mode de réalisation, le système de frein de stationnement 8 est donc configuré pour bloquer automatiquement le basculement du cadre avant 3 lorsque le conducteur ne se trouve plus sur la selle 41 du véhicule 1 et que ledit véhicule 1 est à l'arrêt ou qu'il présente une vitesse réduite. De cette manière, le blocage du basculement est mis en œuvre lorsque le conducteur quitte le véhicule 1 même si ce dernier n'est pas complètement à l'arrêt.

Une autre condition de blocage, en supplément des deux conditions de blocage évoquées ci-dessus, peut être que le système de frein de stationnement 8 ne soit pas déjà activé par ailleurs. En effet, d'un point de vue logiciel, il est pertinent que le système de gestion 38 soit configuré pour ne pas tenter de bloquer le basculement du cadre avant 3 si le frein de stationnement 8 est déjà activé, par exemple manuellement comme expliqué ci-après.

Dans un mode de réalisation particulier représenté schématiquement sur la [Fig.1], le véhicule 1 comporte une serrure d'allumage 44 et un sélecteur de mode de conduite 45 dudit véhicule 1. La serrure d'allumage 44 est configuré pour recevoir une clé de contact (non représentée) permettant d'allumer le groupe motopropulseur 17 et démarrer le véhicule 1 de manière usuelle. Le sélecteur de mode de conduite 45 permet au conducteur de choisir un mode de conduite parmi plusieurs modes disponibles. Le sélecteur de mode de conduite 45 peut notamment prendre au moins deux positions, à savoir une position de marche avant et une position de marche arrière.

Dans ce mode de réalisation particulier, de manière non limitative, le système de frein de stationnement 8 est configuré pour mettre en œuvre le déblocage automatique du basculement du cadre avant 3 lorsque les conditions de déblocage suivantes sont satisfaites :
- la clé de contact se trouve dans une position de conduite dans la serrure d'allumage 44 ;
- la sélecteur de mode de conduite 45 se trouve dans une position de marche avant ou une position de marche arrière ; et
- une présence du conducteur sur la selle 41 du cadre avant 3 est détectée par le détecteur 43. De cette manière, le système de frein de stationnement 8 est configuré pour débloquer automatiquement le basculement du cadre avant 3 lorsque le conducteur est revenu sur le véhicule 1 et qu'il est prêt à repartir.

Ainsi, le véhicule 1 équipé du système de frein de stationnement 8 permet d'obtenir un blocage ou un déblocage du basculement du cadre avant 3 sans qu'aucune action supplémentaire ne soit requise de la part du conducteur. Par exemple, lorsque le conducteur quitte la selle 41 du véhicule 1, le système de frein de stationnement 8 met en œuvre le blocage du basculement automatiquement. Le conducteur n'a donc pas à effectuer d'action particulière pour assurer la stabilité du véhicule 1 à l'arrêt. A l'inverse, lorsque le conducteur revient sur la selle 41 du véhicule 1, que le contact est établi et qu'un mode de conduite est sélectionné, le système de frein de stationnement 8 met en œuvre le déblocage automatiquement. Le conducteur n'a donc pas d'action particulière à effectuer pour repartir avec le basculement du cadre avant 3 opérationnel.

Cela permet d'améliorer grandement l'ergonomie du véhicule 1, particulièrement pour les applications de type véhicule de livraison. En effet, le blocage et le déblocage automatiques permettent un gain de temps et de confort significatif, notamment lorsque le conducteur doit quitter régulièrement le véhicule 1. De plus, cela évite également au conducteur de devoir gérer la stabilité du véhicule 1 à chaque fois qu'il fait un arrêt pour quitter le véhicule 1.

Dans un mode de réalisation particulier, le système de frein de stationnement 8 est configuré pour pouvoir également permettre alternativement un blocage ou un déblocage manuel du basculement du cadre avant 3. Pour ce faire, comme représenté sur la [Fig.1], le système de frein de stationnement 8 peut comporter un second maître-cylindre 39 configuré pour pouvoir être commandé manuellement. Comme le maître-cylindre 36, le maître-cylindre 39 est également configuré pour pouvoir rapprocher ou écarter les mâchoires 34 de l'étrier de frein 32 du disque 33 afin de bloquer le palier 24 et donc le basculement du cadre avant 3.

Par exemple, le maître-cylindre 39 peut être agencé sur le cadre avant 3 à proximité d'une poignée 40 de frein de stationnement. Ladite poignée 40 est connectée au maître-cylindre 39 de façon à pouvoir commander ledit maître-cylindre 39 manuellement. Le conducteur peut ainsi décider de lui-même de bloquer ou débloquer le basculement du cadre avant 3, par exemple lorsqu'il se trouve toujours sur le véhicule 1.

Dans ce mode de réalisation, l'étrier de frein 32 correspond à un étrier de frein double chambre. Un tel étrier de frein 32 présente l'avantage d'être bistable. De cette façon, l'étrier de frein 32 peut être actionné de deux manières différentes, à savoir automatiquement par le maître-cylindre 36 ou manuellement par le maître-cylindre 39.

Par ailleurs, dans un mode de réalisation particulier, le système de frein de stationnement 8 est configuré pour alternativement bloquer ou débloquer simultanément le basculement du cadre avant 3 et le déplacement vers l'avant et/ ou vers l'arrière du véhicule 1. En particulier, ce blocage ou ce déblocage simultané est réalisé aussi bien lorsque le système de frein de stationnement 8 est commandé automatiquement que lorsqu'il est commandé manuellement.

Ainsi, un seul et même système de frein permet de bloquer à la fois le basculement du cadre avant 3 et le déplacement du véhicule 1. Cela permet un gain de temps et de confort accru puisqu'une seule action (automatique ou manuelle) est nécessaire pour réaliser les deux blocages ou déblocages.

### Liste des références :

1 : véhicule
2 : châssis
3 : cadre avant
4 : roue avant
5 : cadre arrière
6 : roue arrière
7 : dispositif pendulaire
8 : système de frein de stationnement
9 : armature
10 : équipage avant
11 : fourche directionnelle
12 : guidon
13 : axe de roue avant
14 : système de frein avant
15 : suspension avant
16 : bras oscillant
17 : groupe motoréducteur
18 : armature de support
19 : axe d'articulation
20 : essieu arrière
21 : suspension arrière
22 : flèche
23 : axe d'articulation du pendulaire
24 : palier
25 : arbre
26 : brides
27 : support
28 : extrémité arrière
29 : clavettes
30 : amortisseur de couple
31 : extrémité distale
32 : étrier de frein
33 : disque
34 : mâchoires
35 : plaquettes de frein
36 : premier maître-cylindre
37 : actionneur
38 : système de gestion
39 : second maître-cylindre
40 : poignée de frein de stationnement
41 : selle
42 : actionneur de frein électrique
43 : détecteur
44 : serrure d'allumage
45 : sélectionneur de mode de conduite

## Revendications

1. Véhicule tricycle comportant un châssis (2) réalisé en au moins deux parties pouvant pivoter l'une par rapport à l'autre, ledit châssis (2) comprenant un cadre avant (3) muni d'une roue avant (4) et configuré pour l'installation d'un conducteur dudit véhicule (1) tricycle sur une selle (41), et un cadre arrière (5) muni de deux roues arrière (6), ledit cadre avant (3) étant articulé en rotation autour d'un axe d'articulation (23) par rapport au cadre arrière (5) de manière à permettre un basculement du cadre avant (3) par rapport au cadre arrière (5) en direction de la chaussée de part et d'autre d'une position verticale,
**caractérisé en ce que** le véhicule (1) tricycle comprend un système de frein de stationnement (8) et un système de gestion (38), ledit système de frein de stationnement (8) étant configuré pour être commandé par le système de gestion (38) de manière à alternativement bloquer ledit basculement du cadre avant (3) de façon automatique lorsqu'au moins une condition de blocage est satisfaite ou débloquer ledit basculement du cadre avant (3) de façon automatique lorsqu'au moins une condition de déblocage est satisfaite.

2. Véhicule tricycle selon la revendication 1,
**caractérisé en ce qu'**il comporte un dispositif pendulaire (7) comprenant un palier (24) lié de façon solidaire au cadre avant (3) et un arbre (25) lié de façon solidaire au cadre arrière (5), ledit palier (24) étant articulé en rotation autour dudit arbre (25), l'axe longitudinal dudit arbre (25) correspondant à l'axe d'articulation (23) permettant le basculement du cadre avant (3), le système de frein de stationnement (8) étant configuré pour alternativement bloquer en rotation le palier (24) de manière à bloquer le basculement du cadre avant (3) ou débloquer en rotation le palier (24) de manière à débloquer le basculement du cadre avant (3).

3. Véhicule tricycle selon la revendication 2,
**caractérisé en ce que** le système de frein de stationnement (8) comprend au moins un étrier de frein (32) muni au moins d'une paire de mâchoires (34), ledit étrier de frein (32) étant fixé sur le cadre arrière (5), le dispositif pendulaire (7) comprenant en outre un disque (33) lié de façon solidaire au palier (24), le disque (33) s'étendant angulairement et perpendiculairement autour du palier (24), ledit étrier de frein (32) étant configuré pour alternativement rapprocher les mâchoires (34) du disque (33) pour que lesdites mâchoires (34) viennent en contact avec ledit disque (33) de manière à bloquer en rotation le palier (24) ou écarter les mâchoires (34) du disque (33) pour que lesdites mâchoires (34) libèrent ledit disque (33) de manière à débloquer en rotation le palier (23).

4. Véhicule tricycle selon la revendication 3,
**caractérisé en ce que** le système de frein de stationnement (8) comprend au moins un premier maître-cylindre (36) et un actionneur (37), le système de gestion (38) étant configuré pour commander l'actionneur (37) de sorte que ledit actionneur (37) commande le premier maître-cylindre (36), ledit premier maître-cylindre (36) étant configuré pour alternativement rapprocher ou écarter les mâchoires (34) de l'étrier de frein (32) lorsqu'il est commandé par l'actionneur (37).

5. Véhicule tricycle selon la revendication 4,
**caractérisé en ce que** l'actionneur (37) permettant de commander le premier maître-cylindre (36) correspond à un actionneur linéaire.

6. Véhicule tricycle selon la revendication 3,
**caractérisé en ce que** le système de frein de stationnement (8) comprend au moins un actionneur de frein électrique (42), le système de gestion (38) étant configuré pour commander l'actionneur de frein électrique (42), l'actionneur de frein électrique (42) étant configuré pour alternativement rapprocher ou écarter les mâchoires (34) de l'étrier de frein (32) lorsqu'il est commandé par le système de gestion (38).

7. Véhicule tricycle selon l'une quelconque des revendications précédentes,
**caractérisé en ce que** le système de frein de stationnement (8) comprend un second maître-cylindre (39) configuré pour pouvoir être actionné manuellement de façon à alternativement bloquer ou débloquer le basculement du cadre avant (3).

8. Véhicule tricycle selon l'une quelconque des revendications précédentes
**caractérisé en ce que** le système de frein de stationnement (8) est configuré pour alternativement bloquer ou débloquer simultanément le basculement du cadre avant (3) et un déplacement avant et/ou arrière du véhicule (1) tricycle.

9. Véhicule tricycle selon l'une quelconque des revendications précédentes,
**caractérisé en ce que** la selle (41) du cadre avant (3) comporte un détecteur (43) de présence ou d'absence du conducteur sur ladite selle (41), le système de frein de stationnement (8) étant configuré pour être commandé par le système de gestion (38) pour mettre en œuvre ledit blocage automatique lorsque les conditions de blocage suivantes sont satisfaites :
- le véhicule tricycle (1) présente une vitesse inférieure ou égale à une vitesse prédéterminée ; et
- une absence du conducteur sur la selle (41) du cadre avant (3) est détectée par ledit détecteur (43).

10. Véhicule tricycle selon l'une quelconque des revendications précédentes,
**caractérisé en ce qu'**il comporte une serrure d'allumage (44) configurée pour recevoir une clé de contact et un sélecteur de mode de conduite (45) du véhicule (1) tricycle, la selle du cadre avant comportant en outre un détecteur (43) de présence ou d'absence du conducteur sur ladite selle (41), le système de frein de stationnement (8) étant configuré pour être commander par le système de gestion (38) pour mettre en œuvre ledit déblocage automatique lorsque les conditions de déblocage suivantes sont satisfaites :
- la clé de contact se trouve dans une position de conduite dans la serrure d'allumage (43) ;
- la sélecteur de mode de conduite (44) se trouve dans une position de marche avant ou une position de marche arrière ; et
- une présence du conducteur sur la selle (41) du cadre avant (3) est détectée par ledit détecteur (43).
